(19) Europäisches Patentamt
European Patent Office
Office européen des brevets

(11) **EP 2 628 045 B1**

(12) **EUROPÄISCHE PATENTSCHRIFT**

(45) Veröffentlichungstag und Bekanntmachung des Hinweises auf die Patenterteilung:
**22.07.2015 Patentblatt 2015/30**

(21) Anmeldenummer: **11752104.7**

(22) Anmeldetag: **10.08.2011**

(51) Int Cl.:
**G02F 1/035** (2006.01)

(86) Internationale Anmeldenummer:
**PCT/EP2011/004009**

(87) Internationale Veröffentlichungsnummer:
**WO 2012/048769 (19.04.2012 Gazette 2012/16)**

(54) **ELEKTRO-OPTISCHER DIGITALER WELLENLEITER-MODULATOR**

DIGITAL ELECTRO-OPTIC WAVEGUIDE MODULATOR

MODULATEUR ÉLECTRO-OPTIQUE NUMÉRIQUE DU TYPE À GUIDE D'ONDES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.10.2010 DE 102010048488**

(43) Veröffentlichungstag der Anmeldung:
**21.08.2013 Patentblatt 2013/34**

(73) Patentinhaber: **Northrop Grumman LITEF GmbH 79115 Freiburg (DE)**

(72) Erfinder: **VOIGT, Sven 79115 Freiburg (DE)**

(74) Vertreter: **Müller Hoffmann & Partner Patentanwälte mbB St.-Martin-Strasse 58 81541 München (DE)**

(56) Entgegenhaltungen:
**WO-A1-98/03895 WO-A1-2004/074914 US-A- 5 137 359**

EP 2 628 045 B1

**Beschreibung**

Die Erfindung betrifft einen digitalen integriert-optischen Modulator, insbesondere für eine faseroptische Signalübertragungs- oder Messeinrichtung. Dieser ist mit einer Elektrodenanordnung versehen, die unter Beibehaltung der Chiplänge bekannter Anordnungen eine demgegenüber erhöhte Auflösung ermöglicht.

HINTERGRUND DER ERFINDUNG

Aus der Patentschrift DE 103 07 525 B4 ist ein digitaler Phasenmodulator mit erhöhter Auflösung für eine faseroptische Signalübertragungs- oder Messeinrichtung bekannt. Dabei wird durch die Kombination binärer und nicht-binärer Elektroden zu einem Grobmodulator und einem Feinmodulator die Auflösung digitaler Elektroden auf 12 bit bis 13 bit erhöht, wobei die benötigte Chiplänge gegenüber einer rein binären 9bit-Anordnung erhalten bleibt.

Die in der genannten Druckschrift beschriebene Lösung ermöglicht zwar eine erhöhte Auflösung von 12 bit oder 13 bit unter Beibehaltung der Gesamtchiplänge. Allerdings ist mit dem dort dargestellten Aufbau die Auflösung nicht weiter zu erhöhen, da die Gesamtchiplänge in der beispielsweise aus der DE 103 07 525 B4 bekannten Konfiguration nicht beibehalten werden kann. Der Grund hierfür liegt darin, dass die mindestens notwendige Gesamtchiplänge von der Mindestbaulänge der kleinsten Elektrode (LSB-Elektrode) abhängt. Eine exakte Bitgewichtsbestimmung für eine sehr kurze LSB-Elektrode ist insbesondere für eine binär/nichtbinäre Anordnung nur mit großen Schwierigkeiten zu bestimmen, daher sind gewisse Mindestlängen für die LSB-Elektrode erforderlich. Die Länge der LSB-Elektrode wiederum bedingt auch die Länge der längsten bzw. meist signifikant gewichteten Elektrode (MSB-Elektrode), die gegenüber der zweitlängsten Elektrode die doppelte Länge aufweisen muss.

Aus der WO-A-2004/074914 ist ein digitaler Phasenmodulator bekannt, dessen Auflösung bei gleicher Chiplänge von davor 9 bit auf 11 bit erhöht ist. Dazu ist vorgesehen, dass die Elektroden längs der Lichtführungsstrecke in mehreren Tripeln angeordnet sind, wobei innerhalb eines Tripels je zwei Elektroden aufeinanderfolgender Länge das gleiche Längenverhältnis zueinander haben.

Aus der WO-A-98/03895 ist ein digitaler Phasenmodulator zur Verwendung in einem faseroptischen Kreisel bekannt, der sich dadurch auszeichnet, dass dieselbe Impulsantwort in beiden Durchlaufrichtungen des Lichts gewährleistet ist. Gemäß einer Ausführungsform sind die Modulationselektroden entlang der beiden Wellenleiterarme, die einer gemeinsamen Gegenelektrode gegenüberliegen, jeweils um 180° zueinander gedreht angeordnet.

Da sich allerdings die technischen Anforderungen auf eine weiter erhöhte Auflösung durch einen 16bit Phasenmodulator richten, um beispielsweise in einem Faserkreisel den Quantisierungsfehler und damit das Quantisierungsrauschen zu verringern, ist es notwendig, ein höheres bit-Design zu schaffen, ohne jedoch dabei die Baugröße nachteilig zu verändern.

Neben den Anwendungen eines digitalen Phasenmodulators in reziproken Interferometern (Faserkreisel, faseroptischer Stromsensor) sind auch Anwendungen in integriert-optischen Amplitudenmodulatoren (Mach-Zehnder-Interferometer) möglich. Solche digitalen Modulatoren können Anwendung finden im Satellitentracking für eine optische Übertragung im Weltall oder in digitalen Laserbelichtern (digitale Erzeugung von Farbstufen). Eine andere Anwendung ist ein digitaler Frequenzmodulator in Laser-Doppler-Anemometern. Ein Phasenmodulator ist gleichzeitig ein Frequenzmodulator (Erzeugung von Seitenbändern). Generell lassen sich alle Anwendungen realisieren, die bisher eine rein analoge Phasen-, Frequenz- oder Amplitudenmodulation in Zusammenhang mit einem integriert-optischen Modulator verwenden.

Daraus ergibt sich die der Erfindung zugrunde liegende Aufgabe, einen digitalen Modulator für eine faseroptische Signalübertragungs- oder Messeinrichtung bereitzustellen, bei dem unter Beibehaltung der Gesamtchiplänge für die bisherige bekannte Anordnung der Elektroden durch eine geeignete neue Anordnung der Elektroden eine 16bit-digitale Elektrodenanordnung realisiert werden kann.

Die der Erfindung zugrunde liegende Aufgabe wird durch einen Modulator gemäß Patentanspruch 1 gelöst.

KURZBESCHREIBUNG DER ZEICHNUNGEN

Die Erfindung und weitere vorteilhafte Einzelheiten werden nachfolgend unter Bezugnahme auf die Zeichnungen in beispielhafter Ausführung näher erläutert. Es zeigen

Fig. 1     eine mögliche Elektrodenanordnung eines 16bit Modulators;

Fig. 2     eine Darstellung der Wellenleiterabschnitte in einem integriert-optischen Modulator.

Fig. 3     eine Anordnung der fünf kleinsten Elektroden eines 16bit Modulators;

**DETAILLIERTE BESCHREIBUNG**

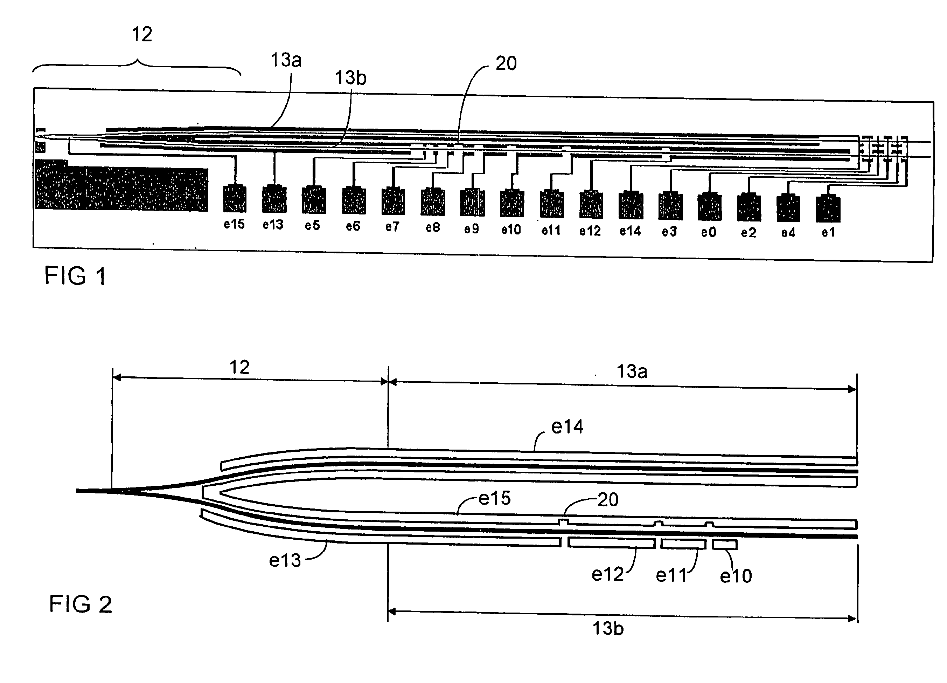

Fig. 1 zeigt als konkretes Ausführungsbeispiel der Erfindung eine mögliche Elektrodenanordnung eines 16bit Phasenmodulators mit zwei Wellenleiterarmen 13a, 13b. (Die einzelnen Wellenleiterabschnitte sind nochmals vergrößert samt des dazugehörigen Y-Verzweigers 12 in Fig. 2 dargestellt, wobei für eine bessere Übersichtlichkeit exemplarisch nur vier Elektroden e10 bis e15 dargestellt sind.) Es handelt sich dabei um einen digitalen Phasenmodulator für faseroptische Signalübertragungs- oder Messeinrichtungen, der eine Vielzahl von Elektroden e0 bis e15 unterschiedlicher Länge aufweist, die entlang beider Wellenleiterarme 13a, 13b parallel zu diesen in oder auf einem optischen Substrat angeordnet sind.

Je nach Lage der Elektroden e0 bis e15 zur Lichtführungsstrecke, bzw. zum Wellenleiterarm, bewirken die mit einer Spannung beaufschlagten Elektroden eine positive oder negative Verschiebung der Lichtphase am Ausgang des Modulators. Dementsprechend werden die Elektroden auch als "positive" bzw. "negative" Elektroden bezeichnet.

In Fig. 1 ist dargestellt, dass die längste (MSB: most significant bit) Elektrode e15 an beiden Wellenleiterarmen 13a, 13b anliegt. Die Elektroden e14 bis e5 liegen jeweils nur an einer Seite jeweils eines Wellenleiterarms 13a, 13b an. Die längste Elektrode e15 ist dabei längs des einen Wellenleiterarms 13b in Teilstücke aufgeteilt, wobei die Teilstücke jeweils den kürzen Elektroden e13 bis e5 gegenüberliegen und über Verbindungsleitungen 20 miteinander verbunden sind.

Die Elektroden e0 bis e15 sind dabei mit vorzugsweise für alle Elektroden gleichen Spannungen beaufschlagbar. Diese Beaufschlagung gestaltet sich derart, dass durch wechselnde Ansteuerauswahl von Elektrodenkombinationen innerhalb eines vorgegebenen Wertebereichs eine Vielzahl von Phasenwerten eingestellt wird.

Ein erfindungsgemäßer Modulator wird in der Regel als eine Baueinheit innerhalb oder auf einem multifunktionalen integrierten optischen Chip (MIOC) realisiert, auf oder in dessen Substrat - beispielsweise aus Lithium-Niobat (LiNbO$_3$) - sich polarisationserhaltende Lichtführungsstrecken als Wellenleiterarme realisieren lassen. Im Falle der Nutzung eines Modulators für einen faseroptischen Gyroskops (FOG) enthält ein solcher MIOC außer einem Strahlteiler beispielsweise noch einen Polarisator. Der Modulator selbst, d. h. seine unterschiedlich langen positiven bzw. negativen Elektroden, beeinflussen die Phasen der beiden gegenläufigen Lichtwege nach einer Verzweigung. Da ein MIOC mit integriertem digitalen Modulator prinzipiell bekannt ist, wird auf Einzelheiten, soweit sie für die Erfindung ohne Bedeutung sind, nicht weiter eingegangen.

Im Substrat des Chips verlaufen wie in Fig. 2 dargestellt nach dem Y-Verzweiger 12 zwei parallele Wellenleiterarme 13a, 13b für den Hin- und den Rückweg einer die Messspule eines faseroptischen Gyroskops durchlaufenden polarisierten Lichtwelle. Dabei ist auch noch einmal klar ersichtlich, dass im Bereich des Y-Verzweigers 12 Teile der längsten Elektrode e15, aber beispielsweise auch Teile der zweitlängsten Elektrode e14 angeordnet sind.

Die in Fig. 1 dargestellten Elektroden e0 bis e15 des erfindungsgemäßen binär/nicht-binären 16bit Modulators sind wie gezeigt angeordnet. Die Aufteilung der Elektroden in binäre und nicht-binäre Elektroden, wie sie bereits bekannt ist - beispielsweise aus der DE 103 07 525 B4 - bleibt hierbei beispielsweise bestehen.

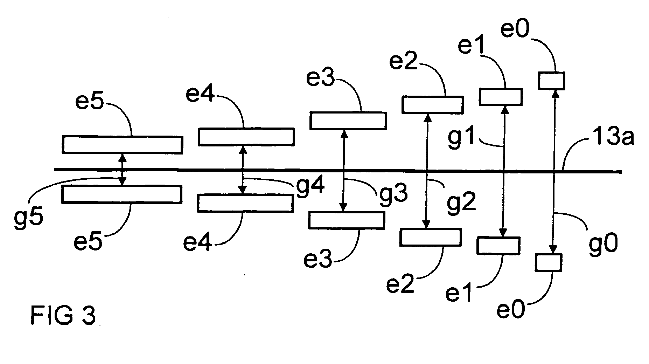

In der Ausgestaltung der Erfindung gemäß Fig. 1 ergibt sich eine sogenannte "11+5-Konfiguration", bei der die Elektroden e5 bis e15 binär gewichtet sind und eine als "Grobmodulator" bezeichnete Gruppe von Elektroden bilden, während mit den Elektroden e0 bis e4 die angestrebte erhöhte Auflösung bei geeigneter Zusammenschaltung realisiert wird. Diese zweite Gruppe von Elektroden bildet einen "Feinmodulator", dessen Anordnung in Fig. 3 nochmals detailliert dargestellt ist. Dabei sollten alle fünf Elektroden e0 bis e4 im dargestellten Beispiel des "Feinmodulators" unterschiedliche Größe aufweisen, um Auslöschungen zu vermeiden.

Durch die freie Anordnung der Elektroden verteilt auf beide Wellenleiterarme besteht die Möglichkeit, unterschiedliche optische Phasenverschiebungen in beiden Wellenleiterarmen einzustellen - beispielsweise Gesamtphasenverschiebungen von -2/3n und 1/3π. Außerdem ergibt sich gegenüber bekannten "push-pull-Anordnungen" bei denen beide Wellenleiterarme mit jeweils gleichen Elektrodenanordnungen versehen sind, eine Reduzierung der Länge des Modulators.

Die längste bzw. meist signifikant gewichtete Elektrode (MSB-Elektrode) ist auf beiden Wellenleiterarmen mit jeweils ihrer halben Länge angeordnet, um damit eine beitragsmäßig etwa gleiche Phasenverschiebung in beiden Wellenleiterarmen zu bewirken, da andere asymmetrische Ansätze komplexer und aufwändiger umzusetzen sind.

Fig. 1 und Fig.2 zeigen hierzu die längste bzw. meist signifikant gewichtete Elektrode (MSB-Elektrode) e15. Diese ist entlang beider Wellenleiterarmen 13a, 13b angeordnet. Diese Anordnung ist mit jeweils der halben Länge entlang der Wellenleiterarme gestaltet.

Ferner kann die Anordnung auf den einander zugewandten Seiten der beiden Wellenleiterarme ausgestaltet sein - in der Darstellung der Fig.1 und Fig.2 also entlang der unteren Seite des oberen Wellenleiterarms 13a und entlang der oberen Seite des unteren Wellenleiterarms 13b. Mindestens ein Teil dieser MSB-Elektrode e15 kann dabei im Bereich des Y-Verzweigers 12 der beiden Wellenleiterarme 13a, 13b angeordnet sein. Durch die Nutzung des Bereichs des Y-Verzweigers 12 kann eine weitere Längenreduzierung erreicht werden.

Die zweitlängste Elektrode e14 ist gegenüber des einen Abschnitts der MSB-Elektrode e15 entlang eines ersten der beiden Wellenleiterarme angeordnet. Diese zweitlängste Elektrode e14 kann ebenfalls mindestens teilweise im Bereich des Y-Verzweigers 12 dieses ersten Wellenleiterarms angeordnet sein.

Die übrigen Elektroden e0 bis e13 können gegenüber der anderen Hälfte der MSB-Elektrode e15 auf dem zweiten der beiden Wellenleiterarme angeordnet sein, wobei mindestens eine weitere der auf dem zweiten Wellenleiterarm angeordneten Elektroden im Krümmungsbereich des Y-Verzweigers 12 dieses zweiten Wellenleiterarms zumindest teilweise angeordnet werden kann.

Durch diese in Fig. 1 dargestellte Elektrodenanordnung lässt sich die Anzahl der Elektrodenzuführungen bzw. der Kreuzungen über den Wellenleiter gegenüber dem bekannten 12bit Modulatordesign reduzieren, so dass die optische Transmission des Chips verbessert wird.

Die Längen der Elektroden entsprechen ihrer Gewichtung auf die Lichtphasenverschiebung. Die nachfolgende Tabelle 1 zeigt ein Beispiel einer solchen Längengewichtung eines 16bit Phasenmodulators. Die in ihrem Beitrag zur Lichtphasenverschiebung höher signifikant gewichteten Elektroden e5 bis e15 bilden einen Grobmodulator und die fünf niedrig signifikantesten Elektroden e0 bis e4 sind einem Feinmodulator zugeordnet:

**Tabelle 1**

| Elektrode | Gewichtung/Längenwert | Feinmodulator |
|---|---|---|
| e0 | 14 | F |
| e1 | -13 | F |
| e2 | -15 | F |
| e3 | -19 | F |
| e4 | 22 | F |
| e5 | 30 | |
| e6 | 60 | |
| e7 | 120 | |
| e8 | 240 | |
| e9 | 480 | |
| e10 | 960 | |
| e11 | 1920 | |
| e12 | 3840 | |
| e13 | 7639 | |
| e14 | 15278 | |
| e15 | -30556 | |

Die Elektroden e0 bis e4. die den Feinmodulator bilden, können dabei entlang nur eines oder beider Wellenleiterarmen angeordnet werden.

In Fig. 3 sind verschiedene Abstände der Elektroden e0 bis e5 zum Wellenleiterarm 13a dargestellt. Der Abstand zwischen den Elektroden auf den einander gegenüberliegenden Seiten eines Wellenleiterarms wird nachfolgend auch als Gaplänge g0 bis g5 bezeichnet.

Anhand der nachfolgenden Tabelle 2 wird eine Anordnung mit einer gegenüber obiger Darstellung kürzeren kleinsten Elektrode (LSB-Elektrode) e0 gezeigt. Mit der Veränderung der Gaplänge, ist es möglich, die Gewichtung der Elektrode einer bestimmten Länge zu beeinflussen.

**Tabelle 2**

| Elektrode | Gewichtung | Gaplänge | Elektrodenlänge |
|---|---|---|---|
| e0 | 1 | 35 | 3,5 |
| e1 | 2 | 30 | 6 |
| e2 | 4 | 25 | 10 |

(fortgesetzt)

| Elektrode | Gewichtung | Gaplänge | Elektrodenlänge |
|-----------|------------|----------|-----------------|
| e3 | 8 | 20 | 16 |
| e4 | 16 | 15 | 24 |
| e5 | 32 | 10 | 32 |
| e6 | 64 | 10 | 64 |
| e7 | 128 | 10 | 128 |
| e8 | 256 | 10 | 256 |
| e9 | 512 | 10 | 512 |
| e10 | 1024 | 10 | 1024 |
| e11 | 2048 | 10 | 2048 |
| e12 | 4096 | 10 | 4096 |
| e13 | 8192 | 10 | 8192 |
| e14 | 16384 | 10 | 16384 |
| e15 | -32768 | 10 | 32768 |

Setzt man die Gewichtungen mit den zugehörigen Elektrodenlängen in $\mu$m gleich, so ergibt sich für die LSB-Elektrode e0 eine Länge von nur 1$\mu$m. Eine derart kleine Struktur stellt entgegen bisheriger Erkenntnisse, denen zufolge die kürzeste Elektrode eine gewisse Mindestlänge von mehreren $\mu$m, beispielsweise 30 $\mu$m, haben sollte, insofern kein Problem mehr da, als in der Strukturierungstechnologie, beispielsweise durch Waferstepper und Imprintlithographie, große Fortschritte gemacht wurden.

Durch geeignete Anordnung der kleinen Elektroden und der entsprechenden Zuführungen zu den Elektroden ist auch die kleinste optische Phasenverschiebungen noch bestimmbar und mit der in der DE 197 53 427 C1 bereitgestellten Korrekturtabelle auf den Sollwert korrigieren.

Bei der Anordnung entsprechend Tabelle 2 können die fünf kleinsten Elektroden in einem bestimmten Verhältnis aus Gaplänge und Elektrodenlänge angeordnet werden, so dass die kleinste Elektrode (LSB-Elektrode) nicht mehr die Länge 1, sondern die Länge 3,5 aufweist. Die optische Phasenverschiebung hingegen bleibt binär und hat einen Wert von 1/65536 n.

Die optische Phasenverschiebung ist dabei proportional zur Elektrodenlänge und umgekehrt proportional zur Gaplänge und kann durch

$$\Delta\rho = \frac{\pi n^3 r_{33} U L \Gamma}{g\lambda}$$

beschrieben werden, wobei folgende Abkürzungen gelten:

n      effektiver Brechungsindex des optischen Wellenleiters
$r_{33}$    elektrooptischer Koeffizient
L      Elektrodenlänge
g      Gaplänge
$\Gamma$     Überlappungsintegral elektrisches und optisches Feld
$\lambda$     Wellenlänge
U      Modulationsspannung.

Dabei werden die Elektroden von Position zu Position verlängert und gleichzeitig die Gaplänge vergrößert, um die entsprechende optische Phasenverschiebung zu erreichen.

Diese in Fig. 3 dargestellte Anordnung ist realisierbar, da das Überlappungsintegral $\Gamma$ über unterschiedlichen Gaplängen konstant ist, beispielsweise zwischen 8 $\mu$m und 30$\mu$m.

Mit dem vorgeschlagenen digitalen integriert-optischen Modulator lassen sich höhere bit-Auflösungen bei gleichbleibender Länge des Modulators bzw. gleich bit-Auflösungen bei verkürzter Länge des Modulators realisieren.

**Patentansprüche**

1. Digitaler integriert-optischer Modulator mit zwei Wellenleiterarmen (13a, 13b) und entlang beider Wellenleiterarme (13a, 13b) in oder auf einem optischen Substrat angeordneten, unterschiedlich langen Elektroden (e0 ... e15), wobei die Elektroden (e14, e15) entlang eines ersten (13a) der zwei Wellenleiterarme (13a, 13b) unterschiedlich zu den Elektroden (e0, ...e13, e15) entlang des zweiten (13b) der zwei Wellenleiterarme (13a, 13b) angeordnet sind, **dadurch gekennzeichnet, dass**
die längste, das heißt die meist signifikant gewichtete Elektrode, MSB-Elektrode, (e15) entlang beider Wellenleiterarme (13a, 13b) mit jeweils ihrer halben Länge angeordnet ist.

2. Digitaler integriert-optischer Modulator nach Anspruch 1,
**dadurch gekennzeichnet,**
**dass** die MSB-Elektrode (e15) auf einander zugewandten Seiten der beiden Wellenleiterarme (13a, 13b) angeordnet ist.

3. Digitaler integriert-optischer Modulator nach einem der Ansprüche 1 oder 2,
**dadurch gekennzeichnet.**
**dass** die zweitlängste Elektrode (e14) entlang des ersten der beiden Wellenleiterarme (13a) und der MSB-Elektrode (e15) gegenüber angeordnet ist.

4. Digitaler integriert-optischer Modulator nach Anspruch 3, **dadurch gekennzeichnet,**
**dass** die übrigen Elektroden (e0 ... e13) entlang des zweiten der beiden Wellenleiterarme (13b) und der MSB-Elektrode (e15) gegenüber angeordnet sind.

5. Digitaler integriert-optischer Modulator nach einem der Ansprüche 1 bis 4,
**dadurch gekennzeichnet,**
**dass** mindestens ein Teil der MSB-Elektrode (e15) entlang von zwei weiteren Wellenleiterarmen eines an die beiden Wellenleiterarme (13a, 13b) anschließenden Y-Verzweigers (12) angeordnet ist.

6. Digitaler integriert-optischer Modulator nach Anspruch 5,
**dadurch gekennzeichnet,**
**dass** die zweitlängste Elektrode (e14) entlang eines ersten der beiden weiteren Wellenreiterarme, der an den ersten Wellenleiterarm (13a) anschließt, angeordnet ist und mindestens eine weitere der entlang des zweiten Wellenleiterarms (13b) angeordneten Elektroden (e0 ... e13) entlang des zweiten Wellenleiterarmes des Y-Verzweigers (12), der an den zweiten Wellenleiterarm (13b) anschließt, angeordnet ist.

7. Digitaler integriert-optischer Modulator nach einem der Ansprüche 1 bis 6,
**dadurch gekennzeichnet,**
**dass** die Abstände (g0 ... g5) von einander auf beiden Seiten eines Wellenleiterarmes (13a) gegenüberliegenden Elektroden (e0 ... e5) verschieden sind.

8. Digitaler integriert-optischer Modulator nach einem der Ansprüche 1 bis 7,
**dadurch gekennzeichnet,**
**dass** dieser als Phasenmodulator ausgebildet ist.

9. Digitaler integriert-optischer Modulator nach einem der Ansprüche 1 bis 7,
**dadurch gekennzeichnet,**
**dass** dieser als Amplitudenmodulator ausgebildet ist.

10. Digitaler integriert-optischer Modulator nach einem der Ansprüche 1 bis 7,
**dadurch gekennzeichnet,**
**dass** dieser als Frequenzmodulator ausgebildet ist.

**Claims**

1. A digital integrated optical modulator having two waveguide arms (13a, 13b) and electrodes with different lengths that are arranged along both waveguide arms in or on an optical substrate, wherein the electrodes (e14, e15) along a first one (13a) of the two waveguide arms (13a, 13b) are arranged in a manner that is different from that of the electrodes (e0,... e13, e14) along the second one of the two waveguide arms (13a, 13b), **characterized in that** the longest, i.e. the most significant electrode, MSB electrode, (e15) is arranged along the two waveguide arms (13a, 13b) so that half of its length extends along each of the two waveguide arms, respectively.

2. The digital integrated optical modulator according to claim 1, **characterized in that** the MSB electrode (e15) is arranged on sides of the two waveguide arms that are facing each other.

3. The digital integrated optical modulator according to claim 1 or 2, **characterized in that** the second longest electrode (e14) is arranged along the first one of the two waveguide arms (13a) and opposite the MSB electrode (e15).

4. The digital integrated optical modulator according to claim 3, **characterized in that** the remaining electrodes (e0,... e13) are arranged along the second of the two waveguide arms (13b) and opposite the MBS electrode (e15).

5. The digital integrated optical modulator according to claims 1 to 4, **characterized in that** at least a part of the MSB electrode (e15) is arranged along two more waveguide arms of a Y-branch (12) that is adjacent to the two waveguide arms (13a, 13b).

6. The digital integrated optical modulator according to claim 5, **characterized in that** the second longest electrode is arranged along a first one of the two further waveguide arms which is adjacent to the first waveguide arm (13a), and at least a further one of the electrodes (e0, ... e13) that are arranged along the second waveguide arm (13b) is arranged along the second waveguide arm of the Y-branch (12) that is adjacent to the second waveguide arm (13b).

7. The digital integrated optical modulator according to any of claims 1 to 6, **characterized in that** the gaps (g0,... g5) of electrodes (e0,... e5) disposed opposite to each other on the two sides of a waveguide arm (13a) are different from each other.

8. The digital integrated optical modulator according to any of claims 1 to 7, **characterized in that** it is formed as a phase modulator.

9. The digital integrated optical modulator according to any of claims 1 to 7, **characterized in that** it is formed as an amplitude modulator.

10. The digital integrated optical modulator according to any of claims 1 to 7, **characterized in that** it is formed as a frequency modulator.

**Revendications**

1. Modulateur optique intégré numérique avec deux bras de guide d'ondes (13a, 13b) et des électrodes (e0...e15) de longueurs différentes disposées le long des deux bras de guide d'ondes (13a, 13b) dans ou sur un substrat optique, étant précisé que les électrodes (e14, e15) sont disposées le long du premier (13a) des deux bras de guide d'ondes (13a, 13b) différemment par rapport aux électrodes (e0,...e13, e15) le long du second (13b) des deux bras de guide d'ondes (13a, 13b), **caractérisé en ce que** l'électrode la plus longue, c'est-à-dire de poids le plus significatif, l'électrode MSB (e15), est disposée le long des deux bras de guide d'onde (13a, 13b) avec la moitié de sa longueur.

2. Modulateur optique intégré numérique selon la revendication 1, **caractérisé en ce que** l'électrode MSB (e15) est disposée sur les côtés tournés l'un vers l'autre des deux bras de guide d'ondes (13a, 13b).

3. Modulateur optique intégré numérique selon l'une des revendications 1 à 2, **caractérisé en ce que** la deuxième électrode la plus longue (e14) est disposée le long du premier des deux bras de guide d'ondes (13a) et en face de l'électrode MSB (e15).

4. Modulateur optique intégré numérique selon la revendication 3, **caractérisé en ce que** les autres électrodes (e0...e13) sont disposées le long du deuxième des deux bras de guide d'ondes optiques (13b) et en face de l'électrode MSB (e15).

5. Modulateur optique intégré numérique selon l'une des revendications 1 à 4, **caractérisé en ce qu'**une partie au moins de l'électrode MSB (e15) est disposée le long de deux autres bras de guide d'ondes d'un répartiteur en Y (12) qui fait suite aux deux bras de guide d'ondes (13a, 13b).

6. Modulateur optique intégré numérique selon la revendication 5, **caractérisé en ce que** la deuxième électrode la plus longue (e14) est disposée le long du premier des deux autres bras de guide d'onde qui fait suite au premier bras de guide d'ondes (13a), et au moins une autre des électrodes (e0...e13) disposées le long du deuxième bras de guide d'ondes (13b) est disposée le long du deuxième bras de guide d'ondes du répartiteur en Y (12) qui fait suite au deuxième bras de guide d'ondes (13b).

7. Modulateur optique intégré numérique selon l'une des revendications 1 à 6, **caractérisé en ce que** les distances (g0...g5) entre des électrodes (e0...e5) opposées des deux côtés d'un bras de guide d'ondes (13a) sont différentes.

8. Modulateur optique intégré numérique selon l'une des revendications 1 à 7, **caractérisé en ce qu'**il est conçu comme un modulateur de phase.

9. Modulateur optique intégré numérique selon l'une des revendications 1 à 7, **caractérisé en ce qu'**il est conçu comme un modulateur d'amplitude.

10. Modulateur optique intégré numérique selon l'une des revendications 1 à 7, **caractérisé en ce qu'**il est conçu comme un modulateur de fréquence.

FIG 1

FIG 2

FIG 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10307525 B4
- WO 2004074914 A
- WO 9803895 A
- DE 19753427 C1